(19) Europäisches Patentamt
European Patent Office
Office européen des brevets

(11) **EP 1 832 638 B1**

(12) **EUROPÄISCHE PATENTSCHRIFT**

(45) Veröffentlichungstag und Bekanntmachung des Hinweises auf die Patenterteilung:
**10.04.2013 Patentblatt 2013/15**

(51) Int Cl.:
***C09J 133/08*** (2006.01)

(21) Anmeldenummer: **07102868.2**

(22) Anmeldetag: **22.02.2007**

(54) **Thermisch vernetzte Acrylat-Hotmelts mit organischen Füllstoffen**

Thermally crosslinked acrylate hot melts comprising organic filler materials

Colle thermofusible d'acrylate thermoréticulable avec des agents de remplissage organiques

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.03.2006 DE 102006011113**

(43) Veröffentlichungstag der Anmeldung:
**12.09.2007 Patentblatt 2007/37**

(73) Patentinhaber: **TESA SE**
**20253 Hamburg (DE)**

(72) Erfinder:
• **Zöllner, Dr. Stephan**
**21244, Buchholz /Nordheide (DE)**

• **Hansen, Sven**
**22765, Hamburg (DE)**
• **Brandes, Kay**
**21259 Otter (DE)**
• **Massow, Klaus**
**22393, Hamburg (DE)**

(74) Vertreter: **Heins, Matthias**
**tesa AG**
**Quickbornstraße 24**
**20253 Hamburg (DE)**

(56) Entgegenhaltungen:
**EP-A- 1 127 907      GB-A- 2 109 798**
**US-A- 5 527 595**

**Beschreibung**

Die Erfindung betrifft durch thermische Behandlung vernetzte Polyacrylate mit Füllstoffen, ein Verfahren zu deren Herstellung sowie deren Anwendung.

Der technologische Prozess zur Herstellung von Haftklebemassen entwickelt sich immer weiter. In der Industrie sind Heißschmelzverfahren (Hotmeltverfahren) mit lösungsmittelfreier Beschichtungstechnik zur Herstellung von Haftklebemassen von anwachsender Bedeutung. Diese Entwicklung wird durch immer größer werdende Umweltauflagen und steigende Preise für Lösemittel weiter forciert. Daher möchte man Lösungsmittel so weit wie möglich aus dem Fertigungsprozess für Haftklebebänder eliminieren. Die Einführung der Hotmelt-Technologie stellt wachsende Anforderungen an die Klebemassen. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen die Acrylathaftklebemassen aber auch hohen Anforderungen im Bereich der Scherfestigkeit gerecht werden. Dies wird durch Polyacrylate mit hohem Molekulargewicht, hoher Polarität und effizienter Vernetzung erreicht. Eine effiziente Vernetzung wird im einfachsten Fall durch Metall-Chelate erreicht, die bei höheren Temperaturen mit Carbonsäurefunktionen reagieren und somit die Acrylathaftklebemasse vernetzen. Diese Methode ist Stand der Technik für lösungsmittelhaltige Haftklebemassen.

Für Hotmeltprozesse ist die Elektronenstrahlhärtung (ES-Härtung oder ESH) bevorzugt, da hiermit auch größere Schichtdicken vernetzt werden können. Für die Elektronenstrahlhärtung wird keine thermische Energie benötigt, und die Vernetzung verläuft in relativ kurzer Zeit.

ES-härtende Polyacrylat-Hotmelts werden seit langem beschrieben. In der US 5,194,455 wurde beispielsweise der Zusatz von N-tert.-Butylacrylamid als Monomer beschrieben, um die ES-Härtung zu forcieren.

Ein allgemeiner Nachteil der ESH ist die Trägerschädigung. Neben der Klebemasse wird auch das Trägermaterial oder das Trennpapier von den Elektronenstrahlen durchdrungen. Dadurch kommt es zu Schädigungen, die sich in Verfärbungen oder in hohen Abrollkräften für das Klebeband bemerkbar machen. Daher besteht der Bedarf für eine den Träger schonende, aber auch effiziente Vernetzungsmethode für Schmelzhaftkleber.

Seit einiger Zeit sind UV-vernetzbare Schmelzhaftkleber kommerziell unter dem Handelsnamen acResin® erhältlich. Diese Massen lassen sich aufgrund ihres relativ niedrigen gewichtsmittleren Molekulargewichts ($M_w$ ca. 200.000 - 300.000 g/mol) sehr gut beschichten und anschließend durch UV-Bestrahlung vernetzen. Nachteilig sind allerdings die Inhomogenität der Vernetzung durch ein Dosisprofil, geringe Effizienz bei harzmodifizierten Acrylatmassen und die Schichtdickenbegrenzung auf deutlich unter 100 $\mu$m, die einen Einsatz für wesentliche Bereiche industrieller Klebebänder ausschließen.

Es wird auch vorgeschlagen, reaktive Gruppen zu schützen und sie dann erst nach der Beschichtung durch einen Mechanismus in Gegenwart von Vernetzern wie multifunktionellen Isocyanaten oder Epoxiden freizusetzen und somit die Vernetzung durchzuführen. Als Beispiel für diese Art der Vernetzung, die durch UV-Initierung mit Hilfe eines Photoacidgenerators durchgeführt wird, ist die Anmeldung EP 1 127 907 A2 genannt. Nachteilig an diesem Verfahren ist die Freisetzung der Schutzgruppe; in diesem konkreten Fall die Freisetzung gasförmigen Isobutens.

GB 2 109 798 A beschreibt Kleb- oder Dichtstoff-Zusammensetzungen auf Basis von ethylenisch ungesättigten Monomeren und Epoxyharzen, die thermisch initiiert radikalisch vernetzen und zusätzlich thermoplastische, klebende Polymere enthalten. Als Vernetzer werden Radikalstarter wie beispielsweise Azoverbindungen und Peroxide genannt.

Eine direkte thermische Vernetzung von Acrylat-Hotmeltmassen, die NCO-reaktive Gruppen enthalten, wird in EP 0 752 435 A1 beschrieben. Die verwendeten biockierungsmittelfreien Isocyanate, insbesondere sterisch gehinderte und dimerisiertes Isocyanate, benötigen sehr drastische Vernetzungsbedingungen, so dass eine sinnvolle technische Umsetzung nicht möglich ist.

Die in der EP 0 752 435 A1 beschriebene Vorgehensweise führt bei den Bedingungen, wie sie bei eine Verarbeitung aus der Schmelze herrschen, zu einer raschen, relativ weitgehenden Vernetzung, so dass eine Verarbeitung der Masse, insbesondere in Hinblick auf eine Beschichtung von Trägermaterialien, schwierig ist. Insbesondere können keine sehr homogenen Klebstoffschichten erhalten werden, wie sie für viele technische Anwendungen von Klebebändern erforderlich sind.

Weiterhin ist die Verwendung von blockierten Isocyanaten Stand der Technik. Nachteilig an diesem Konzept ist die Freisetzung von Blockierungsgruppen bzw. Fragmenten, die einen negativen Effekt auf die klebtechnischen Eigenschaften haben. Ein Beispiel ist US 4.524.104. Hier werden Acrylatschmelzhaftkleber beschrieben, die mit blockierten Polyisocyanaten zusammen mit Cycloamidinen oder Salzen davon als Katalysator vernetzt werden können. Bei diesem System können zum einen der notwendige Katalysator, vor allem aber das entstehende HCN, Phenol, Caprolactam oder dergleichen die Produkteigenschaften stark beeinträchtigen. Zudem sind auch bei diesem Konzept drastische Bedingungen zur Freisetzung der reaktiven Gruppen benötigen. Ein nennenswerter Produkteinsatz ist bislang nicht bekannt und erscheint zudem unattraktiv.

Zur Einstellung anwendungsgerechter Eigenschaften können Haftklebemassen durch Zumischen von Klebharzen, Weichmacher, Vernetzern oder Füllstoffen modifiziert werden.

Füllstoffe werden beispielsweise zur Steigerung der Kohäsion einer Haftklebemasse eingesetzt. Dabei führt häufig eine Kombination aus Füllstoff/Füllstoff-Wechselwirkungen und Füllstoff/Polymer-Wechselwirkungen zu der gewünschten Verstärkung der Polymermatrix. Eine hierauf basierende Kohäsionssteigerung stellt eine weitere physikalische Vernetzungsart dar.

Für Füllstoffe, die im Hinblick auf einen verstärkenden Effekt in Haftklebemassen genannt werden, ist insbesondere die Klasse der pyrogenen Kieselsäuren zu nennen. Sie werden u. a. als Verdickungsmittel, Gelierungsmittel oder Thixotropiermittel in Fluiden unterschiedlichster Art eingesetzt, wobei man ihren Einfluss auf die rheologischen Eigenschaften der Fluide nutzt. Je nach Ziel ist daher der Einsatz von hydrophiler und hydrophober Kieselsäure vorteilhaft. Weitere kohäsionssteigernde Füllstoffe zur Verbesserung der Produkteigenschaften sind beispielsweise modifizierte Schichtsilikate.

Füllstoffe werden auch zur Gewichts- bzw. Volumenerhöhung in Papier, Kunststoffe, sowie Kleb- und Anstrichstoffe und andere Produkte beigemischt. Die Füllstoffzugabe verbessert oftmals die technische Verwendbarkeit der Produkte und hat Einfluss auf deren Qualität, z.B. Festigkeit, Härte usw. Die natürlichen, anorganischen und organischen Füllstoffe, wie Calciumcarbonat, Kaolin, Talkum, Dolomit und dergleichen werden mechanisch hergestellt.

Auch bei Kautschuk und synthetischen Elastomeren kann man durch geeignete Füllstoffe die Qualität verbessern, so beispielsweise Härte, Festigkeit, Elastizität und Dehnung von Bedeutung ist. Viel gebrauchte Füllstoffe sind Carbonate, insbesondere Calciumcarbonat, aber auch Silicate (Talk, Ton, Glimmer), Kieselerde, Calcium- u. Bariumsulfat, Aluminiumhydroxid, Glasfasern und -kugeln sowie Cellulose-Pulver und Ruße.

Man kann anorganische und organische Füllstoffe auch nach ihrer Dichte unterscheiden. So erhöhen die oft in Kunststoffen und auch Klebemassen verwendeten anorgansichen Füllstoffe wie Kreide, Titandioxid, Calcium- und Bariumsulfat die Dichte des Composits, da sie selber eine Dichte aufweisen, die höher ist als die des Polymeren. Bei gleicher Schichtdicke ist das Flächengewicht dann höher.

Daneben gibt es Füllstoffe, die die Gesamtdichte des Composits reduzieren können. Hierzu zählen Mikrohohlkugel, sehr voluminöse Leichtfüllstoffe. Die Kugeln sind mit Luft, Stickstoff oder Kohlendioxid gefüllt, die Kugelschalen bestehen aus Glas, bei einigen Produkten auch aus einem Thermoplasten.

Weiterhin gibt es polymere Füllstoffe mit einer Dichte, die in der Größenordnung der des Haftklebepolymers liegt. Hierein fallen beispielsweise Polyethylen, Polypropylen, Polyamid, Polyacrylonitril, Polyester, Polymethacrylat und Polyacrylat.

Aus US 5,527,595 sind Haftklebstoff-Systeme bekannt, die eine haftklebrige Matrix mit darin dispergierten organischen Partikeln umfassen. Die organischen Partikel weisen eine Teilchengröße von maximal 300 $\mu$m auf, bestehen im Wesentlichen aus organischen Polymeren mit einem Molekulargewicht von mindestens 500 und haben eine Glasübergangstemperatur von mehr als 25°C. Beispielsweise bestehen die organischen Partikel aus Cellulose oder Polyvinylalkohol. Die Matrix ist zumindest einseitig mit ungefüllter Acrylat-basierter Haftklebemasse beschichtet.

Aufgabe der Erfindung ist es, eine Haftklebemasse auf Acrylatbasis zur Verfügung zu stellen, die mit Füllstoffen abgemischt ist, insbesondere mit einem hohen Anteil an Füllstoffen, und welche bei der Beschichtung auf ein Substrat trotzdem ein möglichst gleichmäßiges und homogenes Schichtbild aufweist. Insbesondere gewünscht ist die Vermischung mit zu den künstlichen polymeren Füllstoffen alternativen Füllstoffen, die einfach erhältlich sind und die Eigenschaften der HaftKlebemasse wie Klebkraft und Dichte in Bezug auf die nicht abgemischte Haftklebemasse auch bei hohen Additivanteilen möglichst wenig verändern

Gelöst wird die Aufgabe durch eine Haftklebemasse gemäß Anspruch 1 bei welchem als Füllstoffe nachwachsende Rohstoffe zugesetzt werden, wobei die Haftklebemasse durch ein Verfahren erhältlich ist, bei dem ein lösemittelfreies funktionalisiertes Acrylatcopolymer, welches nach Zudosieren eines thermisch reaktiven Vernetzers eine für das Compoundieren, Fördern und Beschichten ausreichend lange Verarbeitungszeit hat, bevorzugt mittels eines Walzenverfahrens auf eine bahnförmige Schicht eines weiteren Materials, insbesondere ein bandförmiges Trägermaterial oder eine Klebmassenschicht, beschichtet wird und welches nach der Beschichtung unter milden Bedingungen nachvernetzt, bis eine für Haftklebebänder ausreichende Kohäsion erreicht wird.

Entsprechend betrifft die Erfindung eine Haftklebemasse mit organischen Füllstoffen, erhältlich nach einem Verfahren, bei dem einem Polyacrylatcopolymer (im folgenden einfach als "Polyacrylat" bezeichnet) auf Basis von Acrylsäureestern und/oder Methacrylsäureestern in der Schmelze zumindest ein thermischer Vernetzer zugesetzt wird sowie dem Polyacrylat zumindest ein organischer Füllstoff zugesetzt ist oder wird, wobei das mit dem Vernetzer und dem Füllstoff versehene Polyacrylat zu einer Beschichtungseinheit gefördert wird, dort auf eine bahnförmige Schicht eines weiteren Materials, insbesondere ein bandförmiges Trägermaterial oder eine Klebmassenschicht, beschichtet wird, wobei die Vernetzung des Polyacrylats auf der bahnförmigen Schicht des weiteren Materials stattfindet. Erfindungsgemäß ist der Vernetzer ein Isocyanat, enthält ein Teil der Acrylsäureester und/oder Methacrylsäureester primäre Hydroxygruppen, ist der zumindest eine organische Füllstoff ein nachwachsender Rohstoff und beträgt der Anteil der organischen Füllstoffe in der Haftklebemasse 1 bis 30 Gew.-%. Erfindungsgemäß bevorzugt wird der thermische Vernetzer in einem Extruder zugesetzt.

Gegenstand der Erfindung ist weiterhin ein Verfahren, welches ein praxisbezogenens Konzept zur thermischen Vernetzung von Acrylatschmelzhaftklebern in Gegenwart organischer Füllstoffe, wie insbesondere Holzmehle, darstellt.

Das Konzept besteht aus einem im Wesentlichen lösemittelfreien funktionalisierten Acrylatcopolymer, dem die Füllstoffe bevorzugt durch Compoundieren zugemischt sind. Das Acrylatcopolymer hat nach dem Zudosieren eines thermisch reaktiven Vernetzers eine für das Compoundieren, Fördern und Beschichten ausreichend lange Verarbeitungszeit, lässt sich bevorzugt mittels eines Walzenverfahrens auf bandförmiges Trägermaterial beschichten und nach der Beschichtung unter milden Bedingungen nachvernetzen, bis eine für Haftkleber ausreichende Kohäsion erreicht wird.

Als Klebebänder im erfindungsgemäßen Sinne sollen dabei alle ein- oder beidseitig mit Klebmasse beschichteten flächigen oder bandförmigen Trägergebilde verstanden werden, also neben klassischen Bändern auch Etiketten, Abschnitte, Stanzlinge (gestanzte mit Klebemasse beschichtete flächige Trägergebilde), zweidimensional ausgedehnte Gebilde (z.B. Folien) und dergleichen.

Als organische Füllstoffe können insbesondere sowohl pflanzliche und/oder tierische Rohstoffe eingesetzt werden. Die organischen Füllstoffe liegen sehr bevorzugt feinverteilt vor, insbesondere in Form von Fasern, Schrot, Staub oder Mehl.

Als pflanzliche organische Füllstoffe werden bevorzugt nachwachsende Rohstoffe (nachwachsende organische Materialien) gewählt, insbesondere Holz, Kork, Hanf, Flachs, Gräser, Schilf, Stroh, Heu, Getreide, Mais, Nüsse oder Bestandteile der vorgenannten Materialien, wie Schalen (z.B. Nussschalen), Kerne, Grannen oder dergleichen. Insbesondere kommen Holzmehle, Korkmehle, Getreidemehle, Maismehle und/oder Kartoffelmehle zum Einsatz, ohne sich durch die Aufzählung in der erfinderischen Lehre unnötig beschränken zu wollen.

Als tierische organische Füllstoffe kommen insbesondere Knochen, Chitin (z.B. Krebspanzer, Insektenpanzer), Haare, Borsten und Horn in vorteilhafter Weise zur Anwendung, insbesondere in feinverteilter (gemahlener) Form.

Als besonders vorteilhaft haben sich Füllstoffe herausgestellt, bei denen die Größe von zumindest 99 % der Partikeln (als Größe wird der Durchmesser im Falle nahezu runder Partikeln, wie beispielsweise kornförmigen Partikeln, beziehungsweise die maximale Länge im Falle länglicher Partikeln, wie beispielsweise Fasern) nicht mehr als 1000 $\mu$m beträgt.

Bevorzugt können beispielsweise Füllstoffe mit einer der folgenden Größenverteilungen eingesetzt werden, wobei jeweils ein kommerziell erhältliches Beispiel angeführt ist, ohne sich hierdurch aber unnötig beschränken zu wollen.
1.) Füllstoffe, z. B. Holzmehle, mit der Korn-/Fasergrößenverteilung:

Höchstens 5 % über 1000 $\mu$m; mindestens 90 % nicht über 800 $\mu$m, mindestens 50 % nicht über 500 $\mu$m, mindestens 2,5 % nicht über 200 $\mu$m.

Kommerzielles erhältliches Beispiel: Holzmehl Type WF 4063 der Firma HOLZMÜHLE WESTERKAMP GmbH, Deutschland; reines Nadelholz, Struktur fasrig/körnig, Feuchtigkeitsgehalt 8 $\pm$ 2%, Farbe hellgelb, Siebanalyse (Retsch Laborsieb) ergab die Korn-/Fasergrößenverteilung

> 1000 $\mu$m - 1%
> 800 $\mu$m - 7%
>500 $\mu$m - 35%
> 200 $\mu$m - 52%
< 200 $\mu$m - 5%

2.) Füllstoffe, z. B. Holzmehle, mit der Korn-/Fasergrößenverteilung:
Maximale Größe 800 $\mu$m; mindestens 55 % nicht über 500 $\mu$m, mindestens 1 % nicht über 200 $\mu$m.
Kommerziell erhältliches Beispiel: Holzmehl Type WF 8040 der Firma HOLZMÜHLE WESTERKAMP GmbH, Deutschland; reines Nadelholz, Struktur fasrig/körnig, Feuchtigkeitsgehalt 10 $\pm$ 2 %, Farbe hellgelb, Siebanalyse (Retsch Laborsieb) ergab die Korn-/Fasergrößenverteilung

> 1000 $\mu$m:   0%
> 800 $\mu$m:   0%
> 500 $\mu$m:   40%
> 200 $\mu$m:   58%
< 200 $\mu$m:   2%

Besonders bevorzugt ist es, wenn mindestens 80 % der Füllstoffpartikeln eine Größe - im Sinne der vorstehenden Definition - von weniger als 200 $\mu$m aufweisen.

Insbesondere vorteilhaft sind hier Füllstoffe mit der folgenden Größenverteilung, wobei wieder nicht einschränkend ein kommerzielles Beispiel angeführt ist.
3.) Füllstoffe, z. B. Holzmehle, mit der Korn-/Fasergrößenverteilung:
Maximale Größe 280 $\mu$m; mindestens 90 % nicht über 200 $\mu$m, mindestens 65 % nicht über 160 $\mu$m, mindestens 20 %

nicht über 80 μm.

Kommerziell erhältliches Beispiel: Holzmehl Type C 120 der Firma HOLZMÜHLE WESTERKAMP GmbH, Deutschland; reines Nadelholz, Struktur körnig/fasrig, Feuchtigkeitsgehalt 5 ± 2 %, Farbe graugelb; Siebanalyse (Retsch Laborsieb) ergab die Korn-/Fasergrößen-verteilung:

| > 280 μm: | 0% |
|---|---|
| > 200 μm: | 5,6% |
| > 160 μm: | 23,5% |
| > 80 μm: | 48,5% |
| < 80 μm: | 22,4% |

Ganz besonders bevorzugt ist es, wenn mindestens 75 % der Füllstoffpartikeln eine Größe - im Sinne der vorstehenden Definition - von weniger als 200 μm, insbesondere von weniger als 100 μm, und noch vorteilhafter, wenn außerdem mindestens 50 % der Füllstoffpartikeln eine Größe von weniger als 80 μm aufweisen; beispielsweise vorteilhaft Füllstoffe mit der folgenden Größenverteilung. Es wird auch hier ein kommerziell erhältliches Beispiel angeführt, ohne sich hierdurch aber unnötig beschränken zu wollen.

4.) Füllstoffe, z. B. Holzmehle mit der Korn-/Fasergrößenverteilung:

Maximale Größe 200 μm; mindestens 95 % nicht über 160 μm; mindestens 75 % nicht über 100 μm; mindestens 50 % nicht über 80 μm.

Kommerziell erhältliches Beispiel: Holzmehl Type C 160 der Firma HOLZMÜHLE WESTERKAMP GmbH, Deutschland; reines Nadelholz, Struktur körnig/fasrig, Feuchtigkeitsgehalt 5 ± 2 %, Farbe hellgelb; Siebanalyse (Retsch Laborsieb): ergab die Korn-/Fasergrößenverteilung:

| > 200 μm: | 0% |
|---|---|
| > 160 μm: | 2% |
| > 100 μm: | 20% |
| > 80 μm: | 25% |
| < 80 μm: | 53% |

Der Anteil der organischen Füllstoffe in der Haftklebemasse beträgt vorteilhaft 10 bis 25 Gew.-%, noch besser 12 bis 20 Gew.-%.

Die Füllstoffe sind dann ganz besonders vorteilhaft, wenn sie nach Zumischung zu dem Polyacrylat die Dichte der resultierenden Haftklebemasse, bezogen auf die gleiche Menge einer entsprechenden Haftklebemasse ohne Füllstoffe, nicht signifikant ändern. Die resultierende, mit Füllstoffen versehene Haftklebemasse hat vorteilhaft eine Dichte von 0,9 kg/cm$^3$ bis 1,2 kg/cm$^3$.

Insbesondere vorteilhaft werden solche organischen Füllstoffe eingesetzt, besonders bevorzugt aus der Gruppe der vorgenannten Füllstoffe, deren Schüttdichten im Bereich von 0.05 kg/cm$^3$ bis 0,25 kg/cm$^3$, vorzugsweise von 0,08 kg/cm$^3$ bis 0,15 kg/cm$^3$ liegen.

Organische Füllstoffe haben üblicherweise hygroskopische Eigenschaften und besitzen daher häufig, abhängig von dem umgebenden Klima, einen gewissen Feuchtigkeitsgehalt. Bevorzugt weisen die organischen Füllstoffe einen Feuchtigkeitsgehalt von nicht mehr als 10 % auf, insbesondere von nicht mehr als 7 %, ganz besonders von nicht mehr als 5 % (alle Angaben im Fehlerrahmen von ± 2 %). In sehr bevorzugter Vorgehensweise werden die Füllstoffe vor dem Beimischen in die Haftklebemasse weiter getrocknet, um den Feuchtigkeitsgehalt noch zu verringern, und im (weitgehend) trockenen Zustand zugesetzt (weniger als 2 %).

In einer sehr vorteilhaften Ausführungsform ist der zugesetzte thermische Vernetzer ein trimerisiertes Isocyanat. In besonders bevorzugter Weise sind die trimerisierten Isocyanate aliphatische und/oder mit Aminen deaktivierte Isocyanate.

Geeignete Isocyanate sind insbesondere trimerisierte Derivate von MDI [4,4-Methylendi(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethyl-cyclohexan], beispielsweise die Typen Desmodur® N3600 und XP2410 (jeweils BAYER AG: Aliphatische Polyisocyanate, niedrigviskose HDI-Trimerisate). Auch sehr gut geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyante, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG) wobei diese Aufzählung nicht abschließend ist.

Weiterhin vorteilhaft kann als thermischer Vernetzer ein Epoxid eingesetzt werden, insbesondere ein multifunktionelles Epoxid. Zur Beschleunigung der Epoxidvernetzung können in vorteilhafter Vorgehensweise dem Fachmann bekannte Substanzen zugesetzt werden, die z.B. Lewissäuren.

Organische, nachwachsende Rohstoffe bestehen üblicherweise zu einem hohen Anteil aus Zellgewebe und weisen naturgemäß einen relativ hohen Anteil an Substanzen mit vielen Hydroxygruppen auf, wie nachfolgend anhand einiger der vorteilhaft genannten Verbindungen nur beispielhaft aufgezeigt wird. Entsprechendes gilt für die übrigen genannten organischen Rohstoffe und deren Bestandteile.

Chitin ist ein farbloses Aminozucker-haltiges Polysaccharid und besteht aus Ketten von $\beta$-1,4-glycosidisch verknüpften *N*-Acetyl-D-glucosamin-(NAG-)Resten. Es kann als Cellulose-Derivat angesehen werden.

Die einzelnen Bestandteile von Knochen sind Wasser (ca. 25 Prozent) und organische Stoffe (hauptsächlich das Protein Ossium). Weiterhin weisen Knochen einen Anteil an anorganische Mineralien auf.

Holz ist ein natürlicher Werkstoff, der zu 40 bis 50 % aus Cellulose, 20 bis 30 % Holzpolyosen (Polysaccharide; Hemicellulose) und 20 bis 30 % Lignin besteht. Je nach Art des Holzes sind 2 bis 6 % weitere Inhaltsstoffe vorhanden. Kork ist ein Naturstoff, der sich zu 30 bis 56 % aus Säuren, insbesondere Hydroxyfettsäuren und Hydroxybenzoesäuren, 5 bis 15 % aus Wachsen, 2 bis 5 % aus Cellulose und 13 bis 18 Gew.-% Lignin zusammensetzt. Weitere Bestandstoffe des Korks sind Gerbstoffe, Fette, Mineralölsubstanzen und dergleichen. Lignin ist eine hochmolekulare aromatische Verbindung, die zur Verholzung der Zellmembranen führt. Es ist als höhermolekularer Abkömmling des Phenylpropans aufzufassen und weist eine erhebliche Anzahl an Hydroxygruppen auf. Zur näheren Struktur des Lignins wird verwiesen auf Roempp Online, Version 2.9, Dokumentkennung RD-12-01138 (Georg Thieme Verlag).

Die Anwesenheit von stark hydroxygruppenhaltlgen Substanzen als Bestandteile der organischen Füllstoffe in Anwesenheit von thermischen Vernetzern hätte der Fachmann allerdings als sehr problematisch angesehen.

Für den Fachmann daher völlig unerwartet und überraschend konnte gefunden werden, dass die Abmischung von thermische Vernetzer enthaltenden Polyacrylaten mit Holz oder anderen, im Rahmen der vorliegenden Schrift genannten organischen Füllstoffen und die weitere Verarbeitung dieser Polyacrylate zu Haftklebemassen führt, die das in der Aufgabe genannte Anforderungsprofil erfüllen.

Vielmehr hätte der Fachmann von der Beimischung organischer Füllstoffe (Insbesondere in größeren Mengenanteilen), die hydroxygruppenhaltigen Bestandteile aufweisen, Abstand genommen, da die entsprechenden hydroxygruppenhaltigen Bestandteile, wie beispielsweise Lignin oder Chitin, zu einer Einführung von Hydroxygruppen in die Haftklebemasse führen. Durch die Hydroxygruppen in Verbindung mit den anwesenden Isocyanaten, wäre das Eintreten von unkontrollierten Konkurrenzreaktionen zu erwarten gewesen, so zum Beispiel Umesterungsreaktionen. Es wäre also zu erwarten gewesen, dass durch die Hydroxygruppen die Vernetzungstechnik im Hotmelt (in der Schmelze) somit nachteilig gestört werden würde.

Durch Umesterungsreaktionen, insbesondere bei den hohen Temperaturen im Hotmelt-Prozess, hätte der Fachmann erwartet, dass die Estergruppen in erheblichem Anteil durch Hydroxygruppen substituiert werden würden. Durch die im Polyacrylat dann eingebauten Hydroxygruppen würde es zu unkontrollierten Vernetzungs-Konkurrenzreaktionen kommen und somit zu Vergelung der Haftklebemasse und zu Abbaureaktionen bei thermischer Lagerung der Haftklebemassen.

Diese vermuteten Nebenreaktionen, insbesondere die Vergelung der Haftklebemassen, hätte zu Inhomogitäten geführt (lokale Bereiche hoher Vernetzung in der Masse), so dass keine gleichmäßige, homogene Beschichtung mehr möglich sein würde.

Überraschend konnte aber gefunden werden, dass die zu erwartenden Nebenreaktionen nicht oder zumindest nicht in erheblichem Maße stattfinden. Vielmehr entsteht eine homogene, gleichmäßige Haftklebemasse, die die positiven Eigenschaften der Masse ohne Füllstoffe fast vollständig beibehält. Somit konnte durch billige, leicht erhältliche Füllstoffe ein Teil der Haftklebemasse substituiert werden, ohne dass das Substituierte Produkt gegenüber dem nicht substituierten deutliche Nachteile aufwies.

Bei der Herstellung der erfindungsgemäßen Haftklebemasse wird von einem Polyacrylatcopolymer (im folgenden einfach als "Polyacrylat" bezeichnet) auf Basis von Acrylsäureestern und/oder Methacrylsäureestern ausgegangen, wobei zumindest ein Teil der Acrylsäureester und/oder Methacrylsäureester primäre Hydroxygruppen enthält. Der Anteil der primäre Hydroxygruppen enthaltenden Acryl- und/oder Methacrylsäureester beträgt in bevorzugter Vorgehensweise bis zu 25 Gew.-%, bezogen auf das Polyacrylat ohne organische Füllstoffe. Es kann außerdem von Vorteil sein, wenn das Polyacrylat zum Teil einpolymerisierte Acrylsäure aufweist.

Es wird insbesondere vorzugsweise ein Polyacrylat eingesetzt, welches auf die folgende Eduktmischung, enthaltend Monomere der folgenden Zusammensetzung, zurückgeführt werden kann:

   a1) Acrylsäureester und/oder Methacrylsäureester der folgenden Formel

$$CH_2 = CH(R^I)(COOR^{II})$$

wobei $R^I$ = H oder $CH_3$ und $R^{II}$ eine Alkylkette mit 1 bis 20 C-Atomen ist, mit einem Anteil von 65 - 99 Gew.-%,

a2) Acrylate und/oder Methacrylate, deren Alkoholkomponente zumindest eine primäre Hydroxyl-Gruppe enthält, und/oder mit Acrylaten copolymerisierbare Vinylverbindungen, die zumindest eine primäre Hydroxyl-Gruppe enthalten, mit einem Anteil von 1 bis 20 Gew.-%,

a3) und, sofern sich die Anteile von a1) und a2) nicht zu 100 Gew.-% addieren, olefinisch ungesättigte Monomere mit funktionellen Gruppen, mit einem Anteil von 0 bis 15 Gew.-%.

Die Monomere werden bevorzugt dermaßen gewählt, dass die resultierenden Polymere bei Raumtemperatur als Haftklebemassen eingesetzt werden können, insbesondere derart, dass die resultierenden Polymere haftklebrige Eigenschaften entsprechend des "Handbook of Pressure Sensitive Adhesive Technology" von Donatas Satas (van Nostrand, New York 1989, Seite 444 - 514) besitzen.

Die Monomere werden bevorzugt dermaßen gewählt, dass die resultierenden Polymere eine Glasübergangstemperatur von $T_G \leq$ 25 °C aufweisen, im Sinne einer dynamischen Glasübergangstemperatur für amorphe Systeme und der Schmelztemperatur für semikristalline Systeme verstanden, die durch dynamisch mechanische Analyse (DMA) bei geringen Frequenzen bestimmt werden können.

Zur Erzielung einer für Haftklebemassen bevorzugten Glasübergangstemperatur $T_G$ der Polymere von $T_G \leq$ 25 °C werden entsprechend dem vorstehend gesagten die Monomere sehr bevorzugt derart ausgesucht und die mengenmäßige Zusammensetzung der Monomermischung vorteilhaft derart gewählt, dass sich nach einer Gleichung (G1) in Analogie zur *Fox*-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

In einer sehr bevorzugten Weise werden für a1) Acryl- oder Methacrylmomonere eingesetzt, die aus Acryl- und Methacrylsäureester mit Alkylgruppen aus 1 bis 20 C-Atomen bestehen, bevorzugt 4 bis 9 C-Atomen umfassen. Spezifische Beispiele, ohne sich durch diese Aufzählung einschränken zu wollen, sind Methacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat. Weitere einzusetzende Verbindungsklassen für a1) sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer sehr bevorzugten Vorgehensweise werden für a2) Monomere eingesetzt, die Hydroxylgruppen, sehr bevorzugt primäre Hydroxylgruppen enthalten. Beispiel für a2) sind Hydroxyethylacrylat, Hydroxyethylmethacrylat, Hydroxypropylacrylat, Hydroxypropylmethacrylat, 6-Hydroxyhexylmethacrylat, 4-Hydroxystyrol, Allylalkohol wobei diese Aufzählung nicht abschließend ist.

Monomere für a3) sind z.B. olefinisch ungesättigte Monomere mit funktionellen Gruppen wie Carboxylsäuregruppen, Säureanhydridgruppen, Phosphonsäuregruppen, Amid- oder Imid- oder Aminogruppen, Isocyanatgruppen, Epoxygruppen oder Thiolgruppen.

Spezielle Beispiele für a3) sind Acrylsäure oder Methacrylsäure, Maleinsäureanhydrid, Itaconsäureanhydrid, Itaconsäure, Glyceridylmethacrylat, Glycerylmethacrylat, Vinylessigsäure, $\beta$-Acryloyloxypropionsäure, Trichloracrylsäure, Fumarsäure, Crotonsäure, Aconitsäure, Acrylonitril Dimethylacrylsäure, N,N-Dialkylsubstituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Butoxymethyl)methacrylamid, N-Methylolacrylamid, N-(Ethoxymethyl)acrylamid, N-Isopropylacrylamid, wobei diese Aufzählung nicht abschließend ist.

Besonders geeignet sind die Polyacrylate, wenn sie durch Bulk-, Lösungs- oder Emulsionspolymerisation hergestellt werden und gegebenenfalls anschließend, insbesondere falls sie flüchtige Bestandteile einhalten, aufkonzentriert werden.

Die Polyacrylate haben in einer bevorzugten Vorgehensweise ein gewichtsmittleres Molekulargewicht $M_w$ von mindestens 300.000 g/mol bis maximal 1.500.000 g/mol. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS). Die Polyacrylate enthalten mindestens ein Comonomer, welches eine oder mehrere primäre Hydroxygruppen enthält. Es kann notwendig sein, die Polymerisation in Gegenwart von Polymerisationsreglern wie Thiolen, Halogenverbindungen und insbesondere Alkoholen (Isopropanol) durchzuführen, um das gewünschte gewichtsmittlere Molekulargewicht $M_w$ einzustellen.

Besonders geeignet sind auch Polyacrylate, die eine enge Molekulargewichtsverteilung (Polydispersität < 4) haben. Diese Massen sind bei relativ niedrigem Molekulargewicht nach dem Vernetzen besonders scherfest. Da im Vergleich zu einem normal verteilten Polyacrylat bei einem eng verteilten bei gleichem Kohäsionsniveau ein niedrigeres Molekulargewicht erforderlich ist, reduzieren sich Viskosität und Prozesstemperaturen. Somit ermöglicht ein eng verteiltes Polyacrylate eine besonders lange Verarbeitungszeit. Eng verteilte Polyacrylate können durch anionische Polymerisation oder durch kontrollierte radikalische Polymerisationsmethoden hergestellt werden, wobei letzteres besonders gut geeignet ist. Beispiele sind in US 6,765,078 B2 und DE 10036901 A1 bzw. US 2004/0092685 A1 beschrieben. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Für die erfindungsgemäßen Haftklebemassen kann es sehr vorteilhaft sein, wenn diese harzfrei vorliegen. Optional können aber auch die üblichen klebrigmachenden Harze dem Polyacrylat in der Schmelze oder noch vor der Aufkonzentration in Lösung zugesetzt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze. Beliebige Kombinationen dieser und weiterer Harze können eingesetzt werden, um die Eigenschaften der resultierenden Klebmasse wunschgemäß einzustellen. Besonders vorteilhaft lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Ein bevorzugtes Terpenphenolharze ist beispielsweise Dertophene T 110, ein bevorzugtes hydriertes Kolophoniumderivat Foral 85.

Optional können auch weitere pulver- und granulatförmige Füllstoffe, Farbstoffe und Pigmente, besonders auch abrasive und verstärkende, wie z.B. Kreiden ($CaCO_3$) Titandioxide, Zinkoxide und Ruße auch zu hohen Anteilen, das heißt von 1 bis 50 Gew.-%, bezogen auf die Gesamtrezeptur, hervorragend in die Polyacrylatschmelze dosiert, homogen eingearbeitet und beschichtet werden.

Sehr bevorzugt können verschiedene Kreideformen als weiterer Füllstoff eingesetzt werden, wobei besonders bevorzugt Mikrosöhl-Kreide (Fa. Söhlde) eingesetzt wird. Bei bevorzugten Anteilen bis zu 30 Gew% verändern sich die klebtechnischen Eigenschaften (Sofortklebkraft auf Stahl) durch den Füllstoffzusatz nicht entscheidend und führen zum Teil überraschenderweise sogar zu Verbesserungen (Scherfestigkeit bei Raumtemperatur).

Weiterhin können schwerentflammbare Füllstoffe, wie beispielsweise Ammoniumpolyphosphat, weiterhin elektrisch leitfähige Füllstoffe, wie beispielsweise Leitruß, Kohlenstofffasern und/oder silberbeschichtete Kugeln, weiterhin ferromagnetische Additive, wie beispielsweise Eisen-(III)-oxide, weiterhin Additive zur Herstellung geschäumter Schichten, wie beispielsweise Blähmittel, Glasvollkugeln, Glashohlkugeln, expandierbare Microballons, Alterungsschutzmitteln, Lichtschutzmitteln, Ozonschutzmitteln vor oder nach der Aufkonzentration des Polyacrylat zugegeben oder eincompoundiert werden.

Die Schäumung mittels expandierbaren Mikroballons oder Blähmitteln kann vor der Beschichtung im Extruder oder nach der Beschichtung auf der Bahn erfolgen. Zweckmäßig kann es sein, die geschäumte Schicht zu glätten, beispielsweise durch Walzen oder Trennpapier.

Optional können die üblichen Weichmacher in Konzentrationen bis zu 5 Gew.-% zugesetzt werden. Als Weichmacher können z.B. niedermolekulare Polyacrylate, Phthalate, wasserlösliche Weichmacher, Weichharze, Phosphate oder Polyphosphate zudosiert werden.

Optional kann es von Vorteil sein, die thermisch vernetzte Schicht strahlenchemisch nachzuvernetzen. Besonders geeignet ist dazu die Elektronenstrahlvernetzung.

Weiterhin optional kann das thermisch vernetzbare Acrylathotmelt auch mit anderen Polymeren geblendet bzw. abgemischt werden. Hierzu eignen sich Polymere auf Basis von Naturkautschuk, Synthesekautschuk, EVA, Siliconkautschuk, Acrylkautschuk, Polyvinylether:

Hierbei erweist sich als zweckmäßig, diese Polymere in granulierter oder andersartig zerkleinerter Form dem Acrylhotmelt vor Zugabe des thermischen Vernetzers zuzusetzen. Die Herstellung der Polymerblends erfolgt in einem Extruder, bevorzugt in einem Mehrwellenextruder oder in einem Planetwalzenmischer. Zur Stabilisierung der thermisch vernetzten Acrylathotmelts, insbesondere auch der Polymerblends aus thermische vernetzten Acrylathotmelt und anderen Polymeren kann es sinnvoll sein, das ausgeformte Material mit Elektronenbestrahlung geringer Dosen zu bestrahlen. Optional können zu diesem Zweck dem Polycrylat Vernetzungspromotoren wie di-, tri-, oder multifunktionelle Acrylat bzw. Polyester oder Urethanacrylat zugesetzt werden.

Die Erfindung betrifft weiterhin das Verfahren zur Herstellung der erfindungsgemäßen Haftklebemasse und zur Herstellung von Klebebändern, die mit der erfindungsgemäßen Haftklebemasse ausgerüstet sind.

Die Polymerisation der Polyacrylatcopolymere ("Polyacrylate") erfolgt nach den dem Fachmann geläufigen Polymerisationesverfahren und kann in Lösung oder auch in der Schmelze geschehen.
Es können ionische und insbesondere bevorzugt radikalische Polymerisationsverfahren angewandt werden.

Die Polymerisationszeit, insbesondere in Lösung, beträgt - je nach Umsatz und Temperatur- zwischen 2 und 72 Stunden.

Bei der Polymerisation in der Schmelze wird die Lösung anschließend aufkonzentriert. Der Restlösemittelgehalt nach der Aufkonzentration beträgt sehr vorteilhaft nicht mehr als 1 Gew.-%, insbesondere nicht mehr als 0,3 Gew.-%, bezogen auf das Polyacrylat.

Bei dem erfindungsgemäßen Verfahren zur Herstellung von vernetzten Polyacrylat-Haftklebemassen gemäß der vorliegenden Erfindung können die organischen Füllstoffe vor oder nach der Aufkonzentration zugesetzt werden, insbesondere vorteilhaft durch Compoundieren. Nach der Aufkonzentration, also in der Schmelze, werden die reaktiven Vernetzer dem zu vernetzenden Polyacrylat bevorzugt unter genauer Temperatur- und Zeitkontrolle zugesetzt. Die Masse wird zu einer Beschichtungseinheit gefördert und auf einen Träger übertragen, bevorzugt mittels 2-Walzen, Mehrwalzen- oder Düsenbeschichtung.
Die Zeit nach Zudosierung des Vernetzungssystems im Compoundieraggregat bis zum Ausformen auf einen Träger wird als Verarbeitungszeit bezeichnet. Innerhalb dieser Zeit kann die nun vernetzende Haftklebmasse gelfrei und mit optisch gutem Strichbild beschichtet werden. Die Vernetzung erfolgt dann hauptsächlich nach der Beschichtung auf der Bahn unter milden Bedingungen, die weder Träger noch Liner schädigen.

Die Zugabe und Einarbeitung des thermisch reaktiven Vernetzungssystems in die Polyacrylatmatrix erfolgt in erfinderischem Sinne besonders vorteilhaft in kontinuierlich arbeitenden Compoundierungsaggregaten. Diese Aggregate sind erfindungsgemäß so konzipiert, dass bei guter Durchmischung und gleichzeitig geringem Eintrag von Scherenergie eine kurze Verweilzeit der Masse nach der Dosierung des Vernetzungssystems gewährleistet wird. Vorzugsweise sind die Compoundierungsaggregate Doppelschnecken- und/oder Planetwalzenextruder. Dabei ist es besonders vorteilhaft, wenn die Spindeln des Extruders temperierbar und/oder kühlbar sind.
Die Zugabe der Vernetzer erfolgt an einer oder an mehreren Stellen der Aggregate, vorzugsweise in druckfreien Zonen. Günstig ist auch, wenn die thermisch reaktiven Vernetzersubstanzen fein verteilt dem Polyacrylat zugesetzt werden, beispielsweise als Aerosol, in feinen Tröpfchen oder verdünnt in einem geeigneten Verdünnungsmittel wie einem polymerverträglichen Weichmacher.

Bevorzugt geht man vor, indem man den thermischen Vernetzer, insbesondere das trimerisierte Isocyanat, zu 0,1 bis 5 Gew.-%, insbesondere zu 0,2 bis 1 Gew.-%, bezogen auf das Polyacrylat, einsetzt.

Bei einer Weiterentwicklung des erfindungsgemäßen Verfahrens beträgt die Temperatur des Polyacrylats bei der Zugabe des thermischen Vernetzers zwischen 60 °C und 120°C, besonders bevorzugt zwischen 70 °C und 100 °C.

Vorteilhaft beträgt der Restmonomergehalt im Polyacrylat bei Zugabe des thermischen Vernetzers nicht mehr als 1 Gew.-%, insbesondere nicht mehr als 0,3 Gew.-%, bezogen auf das Polyacrylat. Weiter vorteilhaft beträgt der Restlösemittelgehalt im Polyacrylat bei Zugabe des thermischen Vernetzers nicht mehr als 1 Gew.-%, insbesondere nicht mehr als 0,3 Gew.-%, bezogen auf das Polyacrylat.

Im erfinderischen Sinne ist es vorteilhaft möglich, die Zugabe der Füllstoffe, der Vernetzer und gegebenenfalls weiterer Zusatzstoffe zu kombinieren, so dass man das Harz und das Holzmehl bzw. die beschriebenen Füllstoffe gemeinsam in die Polymermatrix einarbeitet.
Es ist auch möglich, die Zumischungen in einem einzigen Extruder oder in Extruderlinien zu realisieren, so dass man ausgehend von dem lösungsmittelhaltigen Basispolymerisat am Ausgang des Extruders bzw. der Extruderlinie ohne zusätzliche Produktionsschritte die erfindungsgemäße, fertig compoundierte, weitgehend lösungsmittelfreie, harz-, füllstoff- und vernetzerabgemischte Selbstklebemasse erhält, die dann der Beschichtung zugeführt wird.
Wie weiter oben erwähnt, wird die Zeit zwischen Zudosierung des Vernetzungssystems bis zum optisch homogenen Ausformen auf einen Träger oder zwischen zwei Trägern als Verarbeitungszeit bezeichnet. Die Verarbeitungszeit ist stark abhängig von Prozesstemperatur, Walzenoberflächentemperaturen, Vernetzertyp und -menge sowie von der Funktionalisierung der Acrylatmasse mit Carboxy- und Hydroxygruppen und gibt den Zeitraum an, in welcher die mit Vernetzer abgemischte Klebmasse mit optisch gutem Strichbild (gelfrei, stippenfrei) beschichtet werden kann.

Das mit dem Vernetzer versehene Polyacrylat wird zu einer Beschichtungseinheit gefördert, besonders bevorzugt mit einem Extruder, noch mehr bevorzugt mit dem Compoundierungsextruder, in dem bereits der Füllstoff und/oder der Vernetzer zugesetzt wurde und in dem ggf. bereits die Aufkonzentration des Polyacrylates stattgefunden hat. Es ist also erfindungsgemäß vorteilhaft, die Aufkonzentration des Polyacrylats, die Füllstoffzugabe und -compoundierung, die Vernetzerzugabe und -compoundierung und den Massetransport in einem einzigen Extruder oder in Extruderlinien zu realisieren, so dass man ausgehend von dem lösungsmittelhaltigen Basispolymerisat am Ausgang des Extruders bzw. der Extruderlinie ohne zusätzliche Produktionschritte die erfindungsgemäße, fertig compoundierte, weitgehend lösungsmittelfreie, harz-, füllstoff- und vernetzerabgemischte Selbstklebemasse erhält und dann der Beschichtung zuführt.

Bei der Beschichtung wird die Polyacrylatmasse auf ein Trägermaterial übertragen, bevorzugt mittels Walzenauftragswerken (Beschichtungskalandern). Die Beschichtungskalander können aus zwei, drei oder mehr Walzen bestehen. Möglich ist auch die Düsenbeschichtung. Niedrigviskose Systeme werden vorzugsweise mit Düsen, höher viskose mit Mehrwalzenwerken beschichtet.

Als Beschichtung wird im Sinne dieser Erfindung das Ausformen der mit Vernetzer abgemischten, weitestgehend lösungsmittelfreien Klebmasse in dünne Schichten und Auftragen auf ein bahnförmiges Trägermaterial bezeichnet. Die Verarbeitungszeit beträgt in der Regel 3 bis 30 Minuten, bevorzugt 5 bis 20 Minuten, besonders bevorzugt 5 bis 10 Minuten.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Gewebe und Gewebefolien und/oder gegebenenfalls Trennpapier verwenden. Diese Aufzählung soll nicht abschließend sein.

Der Träger kann dabei ein Permanentträger (insbesondere zur Herstellung von Trägerbasierten Klebebändern) oder ein Temporärträger (insbesondere zur Herstellung von Transferklebebändern) sein.

Die Beschichtung der Selbstklebemassen erfolgt bevorzugt mit Walzenauftragswerken, auch Beschichtungskalander genannt. Die Beschichtungskalander können vorteilhaft aus zwei, drei, vier oder mehr Walzen bestehen.

Vorteilhaft ist zumindest eine der Walzen mit einer anti-adhäsiven Walzenoberfläche versehen, bevorzugt alle Walzen, die mit dem Polyacrylat in Berührung kommen. Es können in günstiger Vorgehensweise alle Walzen des Kalanders anti-adhäsiv ausgerüstet sein.

Als anti-adhäsive Walzenoberfläche wird besonders bevorzugt ein Stahl-Keramik-Silikon-Verbundwerkstoff eingesetzt. Derartige Walzenoberflächen sind gegen thermische und mechanische Belastungen resistent.

Im Folgenden werden verschiedene erfinderisch geeignete Ausführungsformen beschrieben. Durch die Angabe der Beschichtungsverfahren soll die Erfindung jedoch nicht unnötig beschränkt werden.

Direkt nach der Beschichtung mittels Walzenauftrag oder Extrusionsdüse ist die Klebemasse nur leicht anvernetzt, aber noch nicht ausreichend vernetzt. Die Vernetzungsreaktion verläuft vorteilhaft auf dem Träger.

Die Reaktion mit Isocyanaten verläuft bevorzugt ohne Katalyse. Die Vernetzungsreaktion verläuft auch ohne Wärmezufuhr bei Normalbedingungen (Raumtemperatur) vollständig ab. In der Regel ist nach einer bis zu 14-tägigen, insbesondere einer vier- bis zehntägigen Lagerung die Vernetzungsreaktion mit dem multifunktionalisierten Isocyanat weitestgehend abgeschlossen und die endgültige Kohäsion der Masse erreicht.

Durch die Vernetzung mit Isocyanaten bilden sich Urethangruppen aus, die die Polymerketten verknüpfen. Durch die Verknüpfung erhöhen sich die Kohäsion der Klebmasse und damit auch die Scherfestigkeit. Diese Gruppen sind bekanntermaßen sehr stabil. Dies ermöglicht sehr alterungsstabile und wärmebeständige Selbstklebebänder.

Bei funktionalisierten Acrylatcopolymeren, die keine einpolymerisierte Acrylsäure enthalten, verläuft die Reaktion bevorzugt mit aromatischen und/oder aliphatischen Isocyanaten bei leicht erhöhten Temperaturen.

Bei funktionalisierten Acrylatcopolymeren, die einpolymerisierte Acrylsäure enthalten, ist die Reaktionsgeschwindigkeit schneller. Hier gelingt ein prozessstabiler Prozess bevorzugt mit den langsameren aliphatischen Isocyanaten oder oberflächendeaktivieren Isocyanatemulsionen.

Die physikalischen Eigenschaften des Endproduktes, insbesondere dessen Viskosität, Klebkraft und Anfassklebrigkeit, können durch den Grad der Vernetzung beeinflusst werden, so dass sich durch geeignete Wahl der Reaktionsbedingungen das Endprodukt optimieren lässt. Diverse Faktoren bestimmen das Prozessfenster dieses Verfahrens. Die wichtigsten Einflussgrößen sind Prozess- und Beschichtungstemperatur, Verweilzeit in Compoundierextruder und Beschichtungsaggregat, Vernetzertyp (deaktiviert, aliphatisch, aromatisch), Vernetzerkonzentration, Anteil an Hydroxygruppen im Polymer, Anteil an copolymerisierten Säuregruppen im Polymer sowie das mittlere Molekulargewicht des Polyacrylats.

Im Folgenden werden einige Zusammenhänge bei der Herstellung der erfindungsgemäßen Selbstklebemasse beschrieben, die das Verfahren zur Herstellung optimieren, aber nicht einschränkend für den erfindungsgemäßen Gedanken sind:

Bei gleich bleibender Vernetzerkonzentration führt eine Erhöhung der Prozesstemperatur zu einer verringerten Viskosität, dies verbessert die Beschichtbarkeit der Masse, reduziert jedoch die Verarbeitungszeit. Eine Erhöhung der Verarbeitungszeit erhält man durch Verringerung der Vernetzerkonzentration, Erniedrigung des Molekulargewichts, Verringerung der Konzentration an Hydroxygruppen im Polymer, Verringerung des Säureanteils im Polymer, Verwendung von weniger reaktiven Isocyanaten und Verringerung der Prozesstemperatur. Eine Kohäsionsverbesserung der Masse kann man durch unterschiedliche Wege erhalten. Entweder wird die Vernetzerkonzentration erhöht, was die Verarbeitungszeit reduziert. Man kann bei gleich bleibender Vernetzerkonzentration auch das Molekulargewicht des Polyacrylats erhöhen, was möglicherweise effizienter ist. Je nach gewünschtem Anforderungsprofil der Masse bzw. des Produktes müssen die oben genannten Parameter in geeigneter Weise angepasst werden.

Das mit dem erfindungsgemäßen Verfahren herzustellende Polyacrylat wird insbesondere als Haftklebemasse verwendet, insbesondere als Haftklebemasse für ein Klebeband, wobei die Acrylathaftklebemasse als ein- oder doppelseitiger Film auf einer Trägerfolie vorliegt. Zudem kann das Polyacrylat als viskoelastisches Träger für einseitig oder doppelseitig mit Klebemassen beschichtete Klebebänder verwendet werden. Der viskoelastische Träger bildet dann hauptsächlich die Mittelschicht dreischichtig aufgebauter Klebebänder.

Gegenstand der Erfindung sind daher auch ein- oder zweiseitige Klebebänder, welche mit einer - oder im Falle beidseitiger Klebebänder - mit einer oder zwei Schichten der erfindungsgemäßen mit Füllstoffen, insbesondere Holzmehl, versehenen Haftklebemasse ausgerüstet sind. Weiter Gegenstand der Erfindung sind die trägerlosen Haftklebeschichten als solche (insbesondere im Sinne trägerloser Klebebänder; Transferklebebänder).

Dieses Verfahren eignet sich auch besonders gut zur Herstellung von dreidimensionalen haftklebrigen oder auch nicht haftklebrigen Formkörpern. Ein besonderer Vorteil dieses Verfahrens ist, dass eine Schichtdickenbegrenzung des zu vernetzenden, auszuformenden Polyacrylats im Gegensatz zu UV- und ESH härtenden Verfahren nicht vorhanden ist. Entsprechend der Wahl des Beschichtungs- oder Ausformungsaggregate lassen sich somit beliebig geformte Gebilde herstellen, die dann unter milden Bedingungen zu gewünschter Festigkeit nachvernetzen können.

Besonders geeignet ist dieses Verfahren auch zur Herstellung besonders dicker Schichten, insbesondere von Haftklebeschichten oder viskoelastischen Acrylatschichten mit einer Dicke oberhalb von 80 $\mu$m. Derartige Schichten sind mit der Lösemitteltechnik schlecht herstellbar (Blasenbildung, sehr langsame Beschichtungsgeschwindigkeit, Kaschieren dünner Schichten übereinander ist aufwendig und birgt Schwachstelle).

Gegenstand der Erfindung sind auch Haftklebeschichten und mit Haftklebeschichten ein- oder beidseitig beschichtete Trägermaterialien (Klebebänder), bei denen die Schichtdicke der Haftklebeschicht mindestens 80 $\mu$m, bevorzugt mindestens 100 $\mu$m, besonders bevorzugt mindestens 200 $\mu$m beträgt.

Dicke Haftklebeschichten können ungefüllt als Reinacrylat oder harzabgemischt oder mit organischen oder anorganischen Füllstoffen gefüllt vorliegen. Auch nach den bekannten Verfahren offenzellig oder geschlossenzellig geschäumte Schichten sind möglich. Als Methode zur Schäumung ist die Schäumung über komprimierte Gase wie Stickstoff oder $CO_2$ möglich, oder die Schäumung über Blähmittel wie Hydrazine oder expandierbare Mikroballons. Im Falle der Verwendung von expandierenden Mikroballons wird die Masse bzw. die ausgeformte Schicht vorteilhaft in geeigneter Weise mittels Wärmeeintrag aktiviert werden. Die Schäumung kann im Extruder oder nach der Beschichtung erfolgen. Es kann zweckmäßig sein, die geschäumte Schicht durch geeignete Walzen oder Trennfolien zu glätten sind. Zur Herstellung schäumanaloger Schichten können dem haftklebrigen thermisch vernetzten Acrylatschmelzhaftkleber auch Glasholhlkugeln oder bereits expandierte polymere Mikroballons zugesetzt werden.

Insbesondere können mit diesem Verfahren auch dicke Schichten hergestellt werden, die als Trägerschicht beidseitig mit Haftklebemasse beschichtete Klebebander verwendet werden können, insbesondere bevorzugt gefüllte und geschäumte Schichten, die als Trägerschichten für schaumartige Klebebänder genutzt werden können. Auch bei diesen Schichten ist es sinnvoll, dem Polyacrylat vor dem Zusatz des thermischen Vernetzers Glasvollkugeln, Glashohlkugeln oder expandierende Mikroballons zuzusetzen. Im Falle der Verwendung von expandierenden Mikroballons wird die Masse bzw. die ausgeformte Schicht in geeigneter Weise mittels Wärmeeintrag aktiviert. Die Schäumung kann im Extruder oder nach der Beschichtung erfolgen. Es kann zweckmäßig sein, die geschäumte Schicht durch geeignete Walzen oder Trennfolien oder durch das Zukaschieren einer auf ein Trennmaterial beschichtete Haftklebemassenzu glätten. Zu einer derartigen schaumartigen, viskoelastischen Schicht kann mindestens einseitig eine Haftklebeschicht zukaschiert werden. Bevorzugt wird beidseitig eine Corona-vorbehandelte Polyacrylatschicht zukaschiert. Es können alternativ anders vorbehandelte Klebeschichten, also Haftklebeschichten und/oder hitzeaktivierbare Schichten auf der Basis anderer Polymere als auf Acrylatbasis zu der viskolelastischen Schicht zukaschiert werden. Geeignete Basispolymere sind Klebemassen auf Basis von Naturkautschuk, Synthesekautschuke, Acrylatblockcopolymere, Stryolblockcopolymere, EVA, bestimmte Polyolefine, spezielle Polyurethane, Polyvinylether, und Silikone. Bevorzugt sind jedoch Massen, die keine nennenswerten Anteils an migrierfähigen Bestandteilen haben, die mit dem Polyacrylat so gut verträglich sich, dass in signifikanter Menge in die Acrylatschicht eindiffundieren und dort die Eigenschaften verändern. Statt beidseitig eine Haftklebeschicht zu kaschieren, kann auch mindestens einseitig eine Schmelzklebeschicht oder thermisch aktivierbare Klebschicht verwendet werden. Derartige asymmetrische Klebbänder erlauben das Verkleben kritischer Substrate mit hoher Verklebungsfestigkeit.

Wird die thermisch vernetzte Acrylathotmeltschicht als viskoelastische Trägerschicht verwendet, dann kann der Glasübergangsbereich des Polyacrylats auch oberhalb von +25 °C liegen. Je nach Anteil hartmachender Comonomere wie beispielsweise tert.-Butylacrylat, Isobornylacrylat oder Styrol ist ein $T_G$ von bis zu 80 °C möglich.

Weitere geeignete Füllstoffe für eine thermisch vernetzte Acrylathotmeltschicht, die als viskoelastischer Träger verwendet wird sind hydrophile oder hydrophobe Kieselgele wie Aerosile oder Ultrasile, anorganische Füllstoffe wie Kreide, Titandioxid, Calcium- und Bariumsulfat aber auch organisch Füllstoffe wie Polymerkugeln oder Fasern auf Basis von Cellulose, Polyethylen, Polypropylen, Polyamid, Polyacrylonitril, Polyester, Polymethacrylat und/oder Polyacrylat.

Als weitere hartmachende Comonomere können auch Makromomonere in das Polyacrylat einpolymerisiert sein. Besonders geeignet sich Makromomoere wie in EP 1361260 B1 beschrieben, beispielsweise 2-Polystyrolethylmethacrylat mit einem Molekulargewicht Mw von 13000 g/mol. Diese Makromonomer-modifizierten thermisch vernetzten Acrylathotmelt können als Haftklebemasse oder auch als viskoelastischer Träger verwendet werden.

Für bestimmte Anwendungen kann das dann als Zwischenprodukt vorliegende erfindungsgemäße Klebeband durch zusätzliche Bestrahlung mittels aktinischer Strahlung (beispielsweise UV-Licht oder Elektronenstrahlen) weiter den Erfordernissen angepasst bzw. verbessert werden.

**Beispiele**

Die folgenden beispielhaften Experimente sollen die Erfindung näher erläutern, ohne dass durch die Wahl der angegebenen Beispiele die Erfindung unnötig eingeschränkt werden soll.

Testmethoden:

Feststoffgehalt:

Der Feststoffgehalt ist ein Maß für den Anteil an nicht Verdampfbaren in einer Polymerlösung. Er wird gravimetrisch bestimmt, indem man die Lösung einwiegt, dann für 2 Stunden bei 120°C im Trockenschrank die verdampfbaren Anteile abdampft und den Rückstand zurückwiegt.

K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt.

Nach Normierung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC

Die Bestimmung des mittleren Molekulargewichtes $M_w$ und der Polydisperistät PD erfolgte mittels Gelpermeationschromatographie an 100 $\mu$l klarfiltrierter Probe (Probenkonzentration 4 g/l). Als Eluent wurde Tetrahydrofuran mit 0,1 Vol.-% Trifluoressigsäure eingesetzt. Die Messung erfolgte bei 25 °C. Als Vorsäule wurde eine Säule Typ PSS-SDV, 5 p, $10^3$ Å, ID 8,0 mm x 50 mm verwendet. Zur Auftrennung wurden die Säulen des Typs PSS-SDV, 5 $\mu$, $10^3$ Å sowie $10^5$Å und $10^6$ Å mit jeweils ID 8,0 mm x 300 mm eingesetzt (Säulen der Firma Polymer Standards Service; Detektion mittels Differentialrefraktometer Shodex R171). Die Durchflussmenge betrug 1,0 ml pro Minute. Die Kalibrierung erfolgte gegen PMMA-Standards (Polymethylmethacrylat-Kalibrierung).

180 ° Klebkrafttest

Als zu untersuchende Probe wurde ein Standardpolyesterträger mit einer Stärke von 23 $\mu$m mit der zu untersuchenden Selbstklebemasse einseitig beschichtet (Selbstklebemassenauftrag wie in den Tabellen angegeben).

Ein 20 mm breiter Streifen der Klebebandprobe wurde auf Stahlplatten aufgebracht. Die Stahlplatten wurden zweimal mit Aceton und einmal mit Isopropanol gewaschen. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen. Die Messergebnisse sind in N/cm angegeben und sind gemittelt aus drei Messungen. Alle Messungen wurden bei Raumtemperatur durchgeführt.

Analog wurde die Klebkraft auf Polyethylen (PE) bestimmt. Als definierter Haftgrund (Klebkraftplatte) wurde eine Polyethylen-Platte eingesetzt, die als Prüfplatte im Spritzgussverfahren aus HDPE-Granulat Hostalen GC7260 Firma Basell hergestellt worden war. Vor einer Messung wurde diese Platte mit Ethanol gereinigt. Ein 20 mm breiter Streifen des beschichteten Standardpolyesterträgers wurde unter Belastung (2 kg) auf den Haftgrund aufgedrückt. Unmittelbar im Anschluss daran wurde das Klebeband in einem Winkel von 180 ° vom Substrat mit einer Geschwindigkeit von 300 mm/min abgezogen und die hierfür bei Raumtemperatur benötigte Kraft gemessen. Der Messwert (in N/cm) ergab sich als Mittelwert aus drei Einzelmessungen. Zur Kalibrierung des Messverfahrens wurde ein kommerzielles Testklebeband zur Prüfung von nichtklebenden Beschichtungen (Typ "tesa 7475" der tesa AG; Klebkraft auf Stahl laut Spezifikation: 31,25 N/25 mm) entsprechend diesem Messverfahren untersucht; die hierbei ermittelte Klebkraft auf der Polyethylen-Prüfplatte betrug 4,5 N/cm.

### Scherstandzeit

Als zu untersuchende Probe wurde ein Standardpolyesterträger mit einer Stärke von 23 $\mu$m mit der zu untersuchenden Selbstklebemasse einseitig beschichtet (Selbstklebemassenauftrag wie in den Tabellen angegeben). Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit einem Anpressdruck durch ein Gewicht von 2 kg das Klebeband viermal auf den Stahlträger gedrückt. Bei Raumtemperatur wurde ein 1 kg-Gewicht an dem Klebeband befestigt. Die gemessenen Scherstandzeiten sind in Minuten angegeben und entsprechen dem Mittelwert aus drei Messungen. Die Messung wird bei Normalklima (23 °C, 55 % Luftfeuchtigkeit) und bei 70 °C in einem Wärmeschrank durchgeführt.

### Herstellung der Basispolymere für die Beispiele

Im Folgenden wird die Präparation der Ausgangspolymere beschrieben. Die untersuchten Polymere werden konventionell über eine freie radikalische Polymerisation in Lösung hergestellt.
HEMA = Hydroxyethylmethacrylat
AIBN = [2,2'-Azobis(2-methylbutyronitril)]
Perkadox 16 = Bis-(4-t-Butylcyclohexyl)peroxidicarbonat

### Basispolymer1

Ein für radikalische Polymerisationen konventioneller Reaktor wurde mit 27 kg 2-Ethylhexylacrylat, 27,0 kg n-Butylacrylat, 4,8 kg Methylacrylat, 0,6 kg Acrylsäure und 0,6 kg HEMA in 40 kg Aceton/Isopropanol (92,5:7,5) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h wurden erneut 30 g AIBN zugegeben und nach 4 h wurde mit 10 kg Aceton/Isopropanol-Gemisch (92,5:7,5) verdünnt.

Nach 5 sowie nach 7 h wurde jeweils mit 90 g Perkadox 16 nachinitiiert. Nach 22 h Reaktionszeit wurde die Polymerisation abgebrochen und auf Raumtemperatur abgekühlt. Das Polyacrylat hat einen K-Wert von 78, einen Feststoffgehalt von 54,6 % und ein mittleres Molekulargewicht von Mw = 810000 g/mol, Polydispersität (Mw/Mn) = 7,3

### Verfahren 1: Aufkonzentration/Herstellung von Schmelzhaftkleber:

Die mit Hydroxy-Gruppen funktionalisierten Acrylatcopolymere (Basispolymere) werden mittels BERSTORFF-Einschneckenextruder (Aufkonzentrationsextruder) weitestgehend vom Lösemittel befreit. Exemplarisch sind hier die Parameter der Aufkonzentration des Basispolymeren 1 dargestellt. Die Drehzahl der Schnecke betrug 170 U/min, der Motorstrom 17 A, es wurde ein Durchsatz von 62,3 kg flüssig/h realisiert. Zur Aufkonzentration wurde an 3 verschiedenen Domen ein Vakuum angelegt. Die Unterdrücke betrugen jeweils 340 mbar, 50 mbar und 7 mbar, wobei das geringste Vakuum im ersten Dom angelegt wurde. Die Austrittstemperatur des aufkonzentrierten Hotmelts lag bei 105 °C. Der Feststoffgehalt betrug nach diesem Aufkonzentrationsschritt 99,7%.

### Verfahren 2: Herstellung Harz-modifizierter Schmelzhaftkleber

Die nach dem oben erläuterten Verfahren 1 hergestellten Acrylatschmelzhaftkleber wurden direkt in einen nachgeschalteten WELDING-Doppelschneckenextruder (WELDING Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurden 30 Gew% des Harzes Dertophene T110 (Hersteller DRT, Frankreich) in Zone 1 zudosiert und homogen eingemischt. Exemplarisch sind hier für die Harzcompoundierung mit dem Basispolymer 1 die Parameter dargelegt. Drehzahl betrug 474 U/min, der Motorstrom 44 A, es wurde ein Durchsatz von 31,3 kg/h realisiert. Die Temperaturen der Zonen 1 und 2 betrugen jeweils 100°C, die Schmelzetemperatur in Zone 1 112°C und die Massetemperatur bei Austritt (Zone 3) 90°C.

### Verfahren 3: Herstellung der Füllstoff-modifzierten Selbsthaftkleber, Abmischung mit dem thermischen Vernetzter

Die nach den Verfahren 1 - 2 hergestellten Acrylatschmelzhaftkleber wurden in einem Fütterextruder (Einschneckenförderextruder der Firma TROESTER) aufgeschmolzen und mit diesem als Polymerschmelze in einen Doppelschneckenextruder gefördert (Fa. LEISTRITZ, Deutschland, Bez. LSM 30/34). Das Aggregat wird von außen elektrisch beheizt und über verschiedene Gebläse luftgekühlt. Die Geometrie der Mischschnecken wurde so gewählt, dass bei guter Verteilung des Holzmehles und des Vernetzungssystems in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der Füllstoffe bzw. des Holzmehles und des jeweiligen Vernetzungssystems erfolgt mit geeignetem Dosierequipment gegebenenfalls an mehreren Stellen in die druckfreien Förderzonen des Doppelschneckenextruders. Zur Dosierung des Vernetzungssystems werden gegebenenfalls Dosierhilfsmittel eingesetzt. Gegebenenfalls kann am Doppelschneckenextruder eine Vakuumpumpe angeschlossen werden, um die compoundierte Selbstklebmasse von Gaseinschlüssen zu befreien. Die fertig compoundierte Klebmasse wird dann mittels einer dem Mischextruder nachgeschalteten Schmelzepumpe einer Verteilerdüse zugeführt, die die Klebmasse in den ersten Walzenspalt fördert.

Es können je nach Verwendungszweck des Klebebandes unterschiedliche Qualitäten an Füllstoffen und Holzmehlen/Holzstoffen verwendet werden. Die folgende Auflistung zeigt Details einiger erprobter Holzstoffsorten der Fa. HOLZMÜHLE WESTERKAMP GMBH, DEUTSCHLAND.

Type C 160

-	reines Nadelholz, Struktur körnig/fasrig, Feuchtigkeitsgehalt 5 $\pm$ 2 %, Farbe hellgelb
-	Siebanalyse (Retsch Laborsieb): Korn-/Fasergrößenverteilung
	> 200 $\mu$m - 0 %
	> 160 $\mu$m - 2%
	> 100 $\mu$m - 20%
	>80 $\mu$m - 25%
	< 80 $\mu$m - 53%

Type C 120

-	reines Nadelholz, Struktur körnig/fasrig, Feuchtigkeitsgehalt 5 $\pm$ 2 %, Farbe graugelb
-	Siebanalyse (Retsch Laborsieb): Korn-/Fasergrößenverteilung
	> 280 $\mu$m - 0%
	> 280 $\mu$m - 0 %
	> 200 $\mu$m - 5,6 %
	> 160 $\mu$m - 23,5 %
	> 80 $\mu$m - 48,5 %
	< 80 $\mu$m - 22,4 %

Type WF 8040

-	reines Nadelholz, Struktur fasrig/körnig, Feuchtigkeitsgehalt 10 $\pm$ 2 %, Farbe hellgelb
-	Siebanalyse (Retsch Laborsieb): Korn-/Fasergrößenverteilung
	> 1000 $\mu$m - 0%
	> 800 $\mu$m - 0%
	> 500 $\mu$m - 40 %
	> 200 $\mu$m - 58 %
	< 200 $\mu$m - 2%

Type WF 4063

-	reines Nadelholz, Struktur fasrig/körnig, Feuchtigkeitsgehalt 8 $\pm$ 2 %, Farbe hellgelb
-	Siebanalyse (Retsch Laborsieb): Korn-/Fasergrößenverteilung
	> 1000 $\mu$m - 1%
	> 800 $\mu$m - 7%

> 500 μm - 35 %
> 200 μm - 52 %
< 200 μm - 5 %

Vor der Zumischung zu dem Basispolymer (siehe Beispiele H1 bis H7) wurden die Holzfüllstoffe im Umluftofen bei 115 °C und ansonsten Normbedingungen für 20 bis 30 min getrocknet, bis sie ein gutes rieselfähiges Verhalten aufwiesen.
Die Beschichtung der erfindungsgemäßen Selbstklebemassen erfolgt mittels 2- oder 3-Walzenkalander gemäß einem der unten beschriebenen Verfahren.

Im Folgenden werden konkrete Beispiele zur Herstellung der Selbstklebemassen und Beschichtung der erfindungsgemäßen Klebebänder vorgestellt, ohne dass durch die Wahl der angegebenen Formulierungen, Konfigurationen und Prozessparamter die Erfindung unnötig eingeschränkt werden soll.

Beispiele H1 bis H4

Das Basispolymer 1 wurde gemäß Verfahren 1 aufkonzentriert (Feststoffgehalt 99,7%) und anschließend gemäß Verfahren 2 mit 30 Gew.-% Harz Dertophene T 110 abgemischt. Diese harzmodifizierte Acrylat-Hotmeltmasse wurde gemäß Verfahren 3 mit unterschiedlichen Gehalten getrockneten Holzmehls des Typs C 120 (Fa. HOLZMÜHLE WESTERKAMP, Deutschland) und zusammen mit jeweils 0,96 Gew.-% (bezogen auf Acrylatcopolymer) des hydrophilen, aliphatischen Polyisocyanates BAYHYDUR VP LS 2150/1 (Fa. BAYER MaterialScience) in dem beschriebenen Doppelextruder compoundiert. Zur Verbesserung der Dosierfähigkeit wurde das trimerisierte Diisocyanat mit dem flüssigen Phosphatester REOFOS 65 (Fa. GREAT LAKES, USA) im Verhältnis 1 zu 3 verdünnt. Die Verarbeitungszeit der Compounds ist jeweils größer als 5 Minuten bei effektiven Masseaustrittstemperatur von 85 °C (Beispiel H1 - ohne Holzmehl) bis 125 °C (Beispiel H4 - 29 % Holzmehl) nach Verlassen des LEISTRITZ-Extruders. Die Beschichtung erfolgt am 2-Walzenauftragswerk (Verfahren 4.A) mit Walzenoberflächentemperaturen von 100 °C und Masseaufträgen von 278 bis 390 g/m$^2$ auf 23 μm starke PET-Folie. Weitere Details sowie Prozessparameter zur Herstellung finden sich in Tabelle T1. Von dem hergestellten Klebeband wurden Klebkraft-Messungen auf den Untergründen Stahl und Polyethylen (PE) sowie Tests zur Ermittlung der Scherstandzeiten bei Raumtemperatur durchgeführt. Die Ergebnisse der klebtechnischen Untersuchungen der Beispiele H1 bis H4 sind in Tabelle T2 zusammengefasst. Bemerkenswert und für den Fachmann nicht zu erwarten gewesen ist die Tatsache, dass die klebtechnische Charakteristik des mit 17 Gew.-% Holzmehl gefüllten Klebebandes (Beispiel H2) nahezu identisch dem ungefüllten Muster (Beispiel H1) ist (für Details siehe Tabelle T2).

Beispiele H5 bis H7

Das Basispolymer 1 wurde gemäß Verfahren 1 aufkonzentriert (Feststoffgehalt 99,7%) und anschließend gemäß Verfahren 2 mit 30 Gew.-% Harz Dertophene T 110 abgemischt. Diese harzmodifizierte Acrylat-Hotmeltmasse wurde gemäß Verfahren 3 mit unterschiedlichen Gehalten getrockneten Holzmehls des Typs C 160 (Fa. HOLZMÜHLE WESTERKAMP, Deutschland) zusammen mit 0,29 bzw. 0,30 Gew.-% (bezogen auf Acrylatcopolymer) des trimerisierten, aliphatischen Polyisocyanates DESMODUR XP 2410, Fa. BAYER MATERIALSCIENCE, Deutschland, in dem beschriebenen Doppelschneckenextruder compoundiert. Zur Verbesserung der Dosierfähigkeit wurde das trimerisierte Diisocyanat mit dem flüssigen Phophatester REOFOS 65 (Fa. GREAT LAKES, USA) im Verhältnis 1 zu 4 verdünnt. Die Verarbeitungszeit der Compounds ist jeweils größer als 7 Minuten bei Massetemperaturen nach Verlassen des LEISTRITZ-Extruders von ca. 100 °C.
Die Beschichtung erfolgt mit einem 3-Walzenkalander (Verfahren 4.B), dessen mittlere Walze mit einer anti-adhäsiven Oberfläche des Typs AST 9984-B der Fa. ADVANCED SURFACE TECHNOLOGIES, Deutschland, ausgerüstet ist, die Walze 1 mit der anti-adhäsiven Oberfläche des Typs PALLAS SK-B-012/5 der Fa. PALLAS OBERFLÄCHENTECHNIK GMBH, Deutschland. Die Aussendurchmesser der ersten beiden Walzen betragen jeweils 300 mm, der Aussendurchmesser der dritten Kalanderwalze beträgt 250 mm. Die Temperaturen der ersten beiden Walzen wurde auf 100 °C eingestellt, die der dritten Walze auf 50 °C. Die Temperatur der Verteilerdüse beträgt 100 °C. Bei Bahngeschwindigkeiten bis 280 m/min und Masseaufträgen von 83 g/m$^2$ und 97 g/m$^2$ erfolgt die Beschichtung der Selbstklebemasse gemäß Beispiel H5 auf silikonisiertes Trennpapier (Glassine-Papier), anschließend wird die Selbstklebemasse gemäß einem Verfahren nach dem Stand der Technik auf eine 23 μm starke PET-Folie kaschiert. Die Selbstklebemassen gemäß Beispiel H6 und H7 werden direkt auf die 23 μm starke PET-Folie beschichtet.
Weitere Details zu den Formulierungen, Herstellparametern und Beschichtung finden sich in Tabelle T1, Ergebnisse der klebtechnischen Auswertungen befinden sich in Tabelle T2.

Vernetzer

*BAYHYDUR VP LS 2150/1, Fa. BAYER MATERIALSCIENCE, Deutschland, Vemetzertyp: hydrophiles, aliphatisches Polyisocyanat Desmodur XP2410, Fa. BAYER MA TERIALSCIENCE, Deutschland, Vernetzertyp: trimerisiertes, aliphatisches Polyisocyanat*

| Beispiel | Basispolymer | | | Holzmehl- und Vernetzereinarbeitung, Beschichtung | | | | | | | | | | | |
|---|---|---|---|---|---|---|---|---|---|---|---|---|---|---|---|
| | Basispolymer | K-Wert | Anteil Füllstoffe [Gew.-%] | Vernetzer – Typ und Menge [% Vernetzer auf Polymer] | Massedurchsatz DSE [kg/h] | Drehzahl DSE [1/min] | Solltemperatur DSE [°C] | Stromaufnahme DSE [A] | Druck Ausgang DSE [bar] | Massetemperatur nach DSE [°C] | Beschichtungsverfahren, Temperaturen der Walzen 1 / 2 / 3 [°C] | Verarbeitungszeit [min] | Masseauftrag [g/m²] | Schichtdicke [μm] |
| H 1 | Basis-polymer 1 | 78 | --- | 0,96 % Bayhydur VPLS 2150/1 | 11,0 | 100 | 80 | 14 | 23 | 85 | Verfahren 4.A 100 / 100 / - | > 5 | 278 | 280 |
| H 2 | Basis-polymer 1 | 78· | 17 % Holzstoff C 120 | 0,96 % Bayhydur VPLS 2150/1 | 13,0 | 105 | 80 | 14 | 22 | 98 | Verfahren 4.A 100 / 100 / - | > 5 | 289 | 287 |
| H 3 | Basis-polymer 1 | 78 | 23 % Holzstoff C 120 | 0,96 % Bayhydur VPLS 2150/1 | 13,0 | 280 | 80 | 14 | 16 | 125 | Verfahren 4.A 100 / 100 / - | > 5 | 360 | 356 |
| H 4 | Basis-polymer 1 | 78 | 29 % Holzstoff C 120 | 0,96 % Bayhydur VPLS 2150/1 | 13,0 | 280 | 80 | 14 | 16 | 125 | Verfahren 4.A 100 / 100 / - | > 5 | 390 | 393 |
| H 5 | Basis-polymer 1 | 78 | — | 0,15 % Desmodur XP2410 | 10,5 | 100 | 80 | 13 | 20 | 100 | Verfahren 4.B 100 / 100 / 50 | > 7 | 83 | 83 |
| H 6 | Basis-polymer 1 | 78 | 5 % Holzstoff C 160 | 0,15 % Desmodur XP2410 | 11,5 | 100 | 80 | 13 | 20 | 95 | Verfahren 4.B 100 / 100 / 50 | > 7 | 89 | 88 |
| H 7 | Basis-polymer 1 | 78 | 10 % Holzstoff C 160 | 0,15 % Desmodur XP2410 | 12,0 | 100 | 80 | 14 | 21 | 99 | Verfahren 4.B 100 / 100 / 50 | > 7 | 97 | 97 |

DSE = Doppelschneckenextruder

Tabelle T1: Details zu den Formulierungen, Herstellparametern und zur Beschichtung;

Tabelle T2: Rezeptur, Produktaufbau und klebtechnische Eigenschaften hergestellter Muster

| Beispiel | Zusammensetzung in Gew.-% (Basispolymer, Füllstoffe, Vernetzer) | | | Träger | Masseauftrag [g/m$^2$] | Klebkraft Stahl [N/cm] | Klebkraft PE [N/cm] | Scherstandzeit 5N 23°C [min] |
|---|---|---|---|---|---|---|---|---|
| H 1 | Basispolymer 1 | - | 0,96% Bayhydur VPLS 2150/1 | 23 μm Polyesterfolie | 278 | 9,3 | 3,9 | 4560 |
| H 2 | Basispolymer 1 | 17 % Holzstoff C 120 | 0,96 % Bayhydur VPLS 2150/1 | 23 μm Polyesterfolie | 289 | 9,1 | 3,8 | 990 |
| H 3 | Basispolymer 1 | 23 % Holzstoff C 120 | 0,96% Bayhydur VPLS 2150/1 | 23 μm Polyesterfolie | 360 | 8,3 | 1,1 | 1260 |
| H 4 | Basispolymer 1 | 29 % Holzstoff C 120 | 0,96% Bayhydur VPLS 2150/1 | 23 μm Polyesterfolie | 390 | 3,2 | 0,6 | 210 |
| H 5 | Basispolymer 1 | --- | 0,15% Desmodur XP2410 | 23 μm Polyesterfolie | 83 | 10,6 | 5,2 | 2980 |
| H 6 | Basispolymer 1 | 5 % Holzstoff C160 | 0,15% Desmodur XP2410 | 23 μm Polyesterfolie | 89 | 10,5 | 4,9 | 2100 |
| H 7 | Basispolymer 1 | 10 % Holzstoff C 160 | 0,15 % Desmodur XP2410 | 23 μm Polyesterfolie | 97 | 10,4 | 5,1 | 1080 |

Tabelle T3: Massegewicht (MA) hergestellter Muster im Vergleich zur Schichtdicke

| Beispiel | MA [g/m$^2$] | Dicke [$\mu$m] | Dichte [g/cm$^3$] | Gew.-% Holz |
|---|---|---|---|---|
| H 1 | 278 | 280 | 0,99 | 0 |
| H 2 | 289 | 287 | 1,01 | 17 |
| H 3 | 360 | 356 | 1,01 | 23 |
| H 4 | 390 | 393 | 0,99 | 29 |
| H 5 | 83 | 83 | 1,00 | 0 |
| H 6 | 89 | 88 | 1,01 | 5 |
| H 7 | 97 | 97 | 1,00 | 10 |

Durch die erfindungsgemäße Haftklebemasse wird ein Haftklebesystem angeboten, welches in hervorragender Weise mit kommerziell leicht erhältlichen, günstigen Füllstoffen, insbesondere Holz- und/oder Korkmehlen, versehen ist, ohne dass sich hierdurch die Dichte der Masse, also auch das Flächengewicht bei Beschichtungen für die Herstellung von Klebebändern, in bezug auf die nicht mit derartigen Füllstoffen versetzte, aber chemisch entsprechende Haftklebemasse signifikant ändert. Die klebtechnischen Eigenschaften der Haftklebemasse bleiben auch nach der Beimischung der Füllstoffe weitgehend erhalten. Die Beimischung der Füllstoffe hat kaum Einfluss auf das Viskositätsverhalten der Haftklebemasse.

Bei den Füllstoffen handelt es sich um organische nachwachsende Materialien, die sowohl in der "Herstellung" als auch in der Anwendung ein sehr umweltfreundliches Material sind, so dass die Haftklebemassen - verglichen mit solchen Produkten, die mit chemischen Additiven versetzt sind - ökologische und auch gesundheitliche Vorteile aufweisen.

Die organischen Füllstoffe, insbesondere Holz und/oder Kork, bieten den Vorteil der leichtigkeit bei einer hohen Festigkeit und sind langlebig auch unter kritischen klimatischen Bedingungen. Sie besitzen anisotrope Eigenschaften (z.B. in Bezug auf die Längs- und Querfestigkeit).

Für den Fachmann völlig unerwartet können die Füllstoffe für Haflklebemassen verwendet werden, denen Isocyanate zum Zwecke einer milden Vernetzungsreaktion beigegeben sind. Erwartete Nebenreaktionen, insbesondere zwischen den hydroxidgruppenhaltigen Bestandteilen der organischen Füllstoffe und der thermischen Vernetzer, wurden nicht beobachtet, so dass es nicht zu Vergelungen oder Abbaureaktionen der Haftklebemasse kam.

Die erfindungsgemäße Haftklebemasse ist daher hervorragend für die Herstellung von Klebebändern geeignet, da trotz Anwesenheit organischer Füllstoffe ein sehr gleichmäßiges und homogenes Beschichtungsbild erzielt werden kann.

Ein besonderer Vorteil der thermisch vernetzten Acrylathotmeltschicht ist, dass diese Schichten, ob als viskoelastischer Träger oder als Haftklebemasse genutzt, bei gleicher Oberflächengüte kein Vernetzungsprofil durch die Schicht im Gegensatz zu UV- und ESH-Vernetzten Schichten zeigen (homogene Vernetzung). Dadurch lässt sich die Balance zwischen adhäsiven und kohäsiven Eigenschaften durch die Vernetzung ideal für die gesamte Schicht steuern und einstellen. Bei strahlenchemisch vernetzten Schichten ist immer eine Seite oder eine Tellschicht über oder untervernetzt.

**Patentansprüche**

1. Haftklebemasse enthaltend organische Füllstoffe, erhältlich nach einem Verfahren, bei welchem

- in der Schmelze zu einem Polyacrylatcopolymer ("Polyacrylat") auf Basis von Acrylsäureestern und/oder Methacrylsäureestern ein Vernetzer zugesetzt wird,
- dem Polyacrylat zumindest ein organischer Füllstoff zugesetzt ist oder wird,
- das mit dem Vernetzer und dem Füllstoff versehene Polyacrylat zu einer Beschichtungseinheit gefördert wird, dort auf eine bahnförmige Schicht eines weiteren Materials aufgebracht wird und nach der Aufbringung vernetzt wird,
**dadurch gekennzeichnet, dass**
- der Vernetzer ein Isocyanat ist,
- ein Teil der Acrylsäureester und/oder Methacrylsäureester primäre Hydroxygruppen enthält, und
- der zumindest eine organische Follstoff ein nachwachsender Rohstoff ist und der Anteil der organischen Füllstoffe in der Haftklebemasse 1 bis 30 Gew.-% beträgt.

2. Haflklebemasse nach einem der vorangehenden Ansprüche, **dadurch gekennzeichnet, dass**

die organischen Füllstoffe gewählt werden aus der folgenden Gruppe, bestehend aus Holz, Kork, Hanf, Flachs, Gräsern, Schilf, Stroh, Heu, Getreide, Mais und Bestandteilen der vorgenannten Materialien, wie Schaler oder Grannen

**3.** Haftklebemasse nach einem der vorangehenden Ansprüche, **dadurch gekennzeichnet, dass** die organischen Füllstoffe als kleinverteilte Partikeln vorliegen.

**4.** Haftklebemasse nach Anspruch 3, **dadurch gekennzeichnet, dass** die Größe von mindestens 99 % der Füllstoffpartikeln nicht mehr als 1000 $\mu$m beträgt, wobei als Größe der Durchmesser im Falle nahezu runder Partikeln beziehungsweise die maximale Länge im Falle länglicher Partikeln definiert ist.

**5.** Haftklebemasse nach Anspruch 4, **dadurch gekennzeichnet, dass** mindestens 80 % der Füllstoffpartikeln eine Größe von weniger als 200 $\mu$m aufweisen.

**6.** Verfahren zur Herstellung einer Haftklebemasse, bei welchem

- in der Schmelze zu einem Polyacrylatcopolymer ("Polyacrylat" auf Basis von Acrylsäureestern und/oder Methacrylsäureestern ein Vernetzer zugesetzt wird,
- dem Polyacrylat zumindest ein organischer Füllstoff zugesetzt ist oder wird,
- das mit dem Vernetzer und dem Füllstoff versehene Polyacrylat zu einer Beschichtungseinheit gefördert wird, dort auf eine bahnförmige Schicht eines weiteren Materials aufgebracht wird und nach der Aufbringung homogen vernetzt wird,
**dadurch gekennzeichnet, dass**
- der Vernetzer ein Isocyanat ist,
- ein Teil der Acrylsäureester und/oder Methacrylsäureester primäre Hydroxygruppen enthält, und
- der zumindest eine organische Füllstoff ein nachwachsender Rohstoff ist und der Anteil der organischen Füllstoffe in der Haftklebemasse 1 bis 30 Gew.-% beträgt.

**7.** Verfahren nach Anspruch 6, **dadurch gekennzeichnet, dass** der thermische Vernetzer ein trimerisiertes Isocyanat ist.

**8.** Verfahren nach einem der Ansprüche 6 bis 7, **dadurch gekennzeichnet, dass** die Beschichtungseinheit ein Mehrwalzenbeschichtungskalander ist.

**Claims**

**1.** Pressure-sensitive adhesive comprising organic fillers, obtainable by a process in which

- a crosslinker is added in the melt to a polyacrylate copolymer ("polyacrylate") based on acrylic esters and/or methacrylic esters,
- at least one organic filler has been or is added to the polyacrylate,
- the polyacrylate provided with the crosslinker and the filler is conveyed to a coating unit, where it is applied to a web-form coat of a further material and, following application, is crosslinked,
**characterized in that**
- the crosslinker is an isocyanate,
- a fraction of the acrylic esters and/or methacrylic esters contains primary hydroxyl groups, and
- the at least one organic filler is a renewable raw material and
- the fraction of organic fillers in the adhesive is 1% to 30% by weight.

**2.** Pressure-sensitive adhesive according to any one of the preceding claims, **characterized in that** the organic fillers are selected from the group consisting of wood, cork, hemp, flax, grasses, reed, straw, hay, cereal, maize, and constituents of the aforementioned materials, such as shells or awns.

**3.** Pressure-sensitive adhesive according to any one of the preceding claims, **characterized in that** the organic fillers are in the form of finely divided particles.

**4.** Pressure-sensitive adhesive according to Claim 3, **characterized in that** the size of at least 99% of the filler particles is not more than 1000 $\mu$m, the size being defined as the diameter in the case of virtually round particles or the maximum length in the case of elongate particles.

**5.** Pressure-sensitive adhesive according to Claim 4, **characterized in that** at least 80% of the filler particles have a size of less than 200 $\mu$m.

**6.** Process for preparing a pressure-sensitive adhesive, in which

- a crosslinker is added in the melt to a polyacrylate copolymer ("polyacrylate") based on acrylic esters and/or methacrylic esters,
- at least one orgainic filler has been or is added to the polyacrylate,
- the polyacrylate provided with the crosslinker and the filler is conveyed to a coating unit, where it is applied to a web-form coat of a further material and, following application, is homogeneously crosslinked,
**characterized in that**
- the crosslinker is an isocyanate,
- a fraction of the acrylic esters and/or methacrylic esters contains primary hydroxyl groups, and
- the at least one organic filler is a renewable raw material and the fraction of organic fillers in the adhesive is 1% to 30% by weight.

**7.** Process according to Claim 6, **characterized in that** the thermal crosslinker is a trimerized isocyanate.

**8.** Process according to any one of Claims 6 to 7, **characterized in that** the coating unit is a multiple-roll coating calender.

**Revendications**

**1.** Matière adhésive sensible à la pression contenant des charges organiques, pouvant être obtenue par un procédé selon lequel :

- un agent de réticulation est ajouté à l'état fondu à un copolymère de polyacrylate (« polyacrylate ») à base d'esters de l'acide acrylique et/ou d'esters de l'acide méthacrylique,
- au moins une charge organique est ajoutée au polyacrylate,
- le polyacrylate muni de l'agent de réticulation et de la charge est transféré vers une unité de revêtement, y est appliqué sur une couche en forme de bande d'un autre matériau et réticulé après l'application,
**caractérisé en ce que**
- l'agent de réticulation est un isocyanate,
- une partie des esters de l'acide acrylique et/ou des esters de l'acide méthacrylique contient des groupes hydroxy primaires et
- la ou les charges sont une matière première renouvelable et la proportion de charges organiques dans la matière adhésive sensible à la pression est de 1 à 30 % en poids.

**2.** Matière adhésive sensible à la pression selon l'une quelconque des revendications précédentes, **caractérisée en ce que** les charges organiques sont choisies dans le groupe suivant, constitué par le bois, le liège, le chanvre, le lin, les herbes, le roseau, la paille, le foin, les céréales, le maïs et les constituants des matériaux susmentionnés, tels que les enveloppes ou les barbes.

**3.** Matière adhésive sensible à la pression selon l'une quelconque des revendications précédentes, **caractérisée en ce que** les charges organiques se présentent sous la forme de particules finement divisées.

**4.** Matière adhésive sensible à la pression selon la revendication 3, **caractérisée en ce que** la taille d'au moins 99 % des particules de charge est inférieure ou égale à 1 000 $\mu$m, la taille étant définie par le diamètre dans le cas de particules presque rondes ou par la longueur maximale dans le cas de particules allongées.

**5.** Matière adhésive sensible à la pression selon la revendication 4, **caractérisée en ce qu'** au moins 80 % des particules de charge présentent une taille inférieure à 200 $\mu$m.

**6.** Procédé de fabrication d'une matière adhésive sensible à la pression, selon lequel

- un agent de réticulation est ajouté à l'état fondu à un copolymère de polyacrylate (« polyacrylate ») à base d'esters de l'acide acrylique et/ou d'esters de l'acide méthacrylique,
- au moins une charge organique est ajoutée au polyacrylate,
- le polyacrylate muni de l'agent de réticulation et de la charge est transféré vers une unité de revêtement, y est appliqué sur une couche en forme de bande d'un autre matériau et réticulé de manière homogène après l'application,
**caractérisé en ce que**
- l'agent de réticulation est un isocyanate,
- une partie des esters de l'acide acrylique et/ou des esters de l'acide méthacrylique contient des groupes hydroxy primaires et
- la ou les charges sont une matière première renouvelable et la proportion de charges organiques dans la matière adhésive sensible à la pression est de 1 à 30 % en poids.

**7.** Procédé selon la revendication 6, **caractérisé en ce que** l'agent de réticulation thermique est un isocyanate trimérisé.

**8.** Procédé selon l'une quelconque des revendications 6 à 7, **caractérisé en ce que** l'unité de revêtement est une calandre de revêtement à plusieurs cylindres.

## IN DER BESCHREIBUNG AUFGEFÜHRTE DOKUMENTE

### In der Beschreibung aufgeführte Patentdokumente

- US 5194455 A
- EP 1127907 A2
- GB 2109798 A
- EP 0752435 A1
- US 4524104 A
- US 5527595 A
- US 6765078 B2
- DE 10036901 A1
- US 20040092685 A1

- EP 0824111 A1
- EP 826698 A1
- EP 824110 A1
- EP 841346 A1
- EP 850957 A1
- US 5945491 A
- US 5854364 A
- US 5789487 A
- EP 1361260 B1

### In der Beschreibung aufgeführte Nicht-Patentliteratur

- Roempp Online, Version 2.9, Dokumentkennung RD-12-01138. Georg Thieme Verlag
- **DONATAS SATAS.** Handbook of Pressure Sensitive Adhesive Technology. van Nostrand, 1989, 444-514

- **T.G. FOX.** *Bull. Am. Phys. Soc.,* 1956, vol. 1, 123